Europäisches Patentamt

European Patent Office

Office européen des brevets

(19)

(11) **EP 1 002 217 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(51) Int Cl.⁷: $G01B\ 11/00$, $G01B\ 11/02$

(21) Anmeldenummer: **99926238.9**

(22) Anmeldetag: **14.04.1999**

(86) Internationale Anmeldenummer:
**PCT/DE1999/001106**

(87) Internationale Veröffentlichungsnummer:
**WO 1999/064815 (16.12.1999 Gazette 1999/50)**

(54) **VERFAHREN ZUR BESTIMMUNG DES ABSTANDES P EINER KANTE EINES STRUKTURELEMENTES AUF EINEM SUBSTRAT**

METHOD FOR DETERMINING THE DISTANCE P OF AN EDGE OF A STRUCTURAL ELEMENT ON A SUBSTRATE

PROCEDE POUR DETERMINER LA DISTANCE P D'UNE ARETE D'UN ELEMENT STRUCTURAL SUR UN SUBSTRAT

(84) Benannte Vertragsstaaten:
**DE FR GB**

(30) Priorität: **10.06.1998 DE 19825829**

(43) Veröffentlichungstag der Anmeldung:
**24.05.2000 Patentblatt 2000/21**

(73) Patentinhaber: **Leica Microsystems Semiconductor GmbH**
**35578 Wetzlar (DE)**

(72) Erfinder: **RINN, Klaus**
**D-35452 Heuchelheim (DE)**

(74) Vertreter: **Reichert, Werner F., Dr.**
**Leica Microsystems International Holdings GmbH,**
**Konzernstelle Patente + Marken,**
**Postfach 20 20**
**35530 Wetzlar (DE)**

(56) Entgegenhaltungen:
**EP-A- 0 047 127      DE-A- 3 323 836**
**DE-A- 3 612 145      DE-A- 19 642 293**

**Beschreibung**

Die Erfindung betrifft ein Verfahren zur Bestimmung des Abstandes P einer Kante eines Strukturelementes auf einem Substrat nach den Merkmalen des Oberbegriffs des Anspruchs 1.

Eine zur Durchführung des bekannten Verfahrens geeignete Meßmaschine ist z.B. in dem im Education Program der Semicon Genf am 31.3.98 ausgegebenen Vortragsmanuskripts "Pattern Placement Metrology for Mask Making", Dr. Carola Bläsing, beschrieben.

Die zu vermessenden Strukturelemente sind insbesondere opake oder transparente Bereiche auf Maskenoberflächen oder Strukturen auf Wafern oder Reticlen, die für die Halbleiterherstellung verwendet werden. Gemessen wird die Lage der Kanten der Strukturelemente in einem auf der Maske definierten Koordinatensystem. Die Maske wird auf einem in der Meßmaschine in einer Meßebene verschiebbaren Meßtisch gelagert. Der Meßtisch ist relativ zu einem Bezugspunkt interferometrisch meßbar verschiebbar, wobei die Lage des Masken-Koordinatensystems über Alignmentmarken relativ zum Maschinen-Koordinatensystem ausgerichtet wird. Als Bezugspunkt dient üblicherweise der Auftreffpunkt der optischen Achse des Abbildungssystems auf der Maske.

Ein zu vermessender Strukturbereich wird nach entsprechender Verschiebung des Meßtisches durch das Abbildungssystem auf ein Detektorarray einer CCD-Kamera vergrößert abgebildet, dessen Pixel in Zeilen und Spalten parallel zu den ausgerichteten Achsen des Masken-Koordinatensystems angeordnet sind. Üblicherweise sind die Kanten der zu vermessenden Strukturelemente ebenfalls parallel oder senkrecht zu den Achsen des Masken-Koordinatensystems und damit auch zu den Zeilen und Spalten des Detektorarrays orientiert. Die aus der Auswertung des von dem Detektorarray aufgenommenen Bildes des Strukturelementes resultierende Kantenlage wird durch die interpolierte Pixelzeile oder Pixelspalte angegeben, auf der die Kante relativ zum Bezugspunkt liegt. Das Detektorarray wird im allgemeinen so ausgerichtet, daß sein Zentrum auf der optischen Achse des Abbildungssystems liegt, so daß dieses Zentrum als Bezugspunkt verwendet wird.

Die Auswertung des Bildes des Strukturelementes erfolgt mit bildanalytischen Methoden. Mit Hilfe eines softwaremäßig generierten rechteckigen Meßfensters wird ein bestimmter Arraybereich für die Messung ausgewählt. Das Meßfenster wird auf einen Ausschnitt des zu vermessenden Bildes des Strukturelementes gelegt. Durch das Auflösungsvermögen und die Abbildungsgüte des Abbildungssystems bedingt, ist der Kontrast des Kantenbildes unterschiedlich stark. Mit Hilfe eines TV-Autofokussystems wird der beste Kontrast eingestellt. Aus den Intensitäten der jeweils in einer Zeile oder Spalte parallel zur Kante des Strukturelementes liegenden Pixel innerhalb eines Meßfensters wird ein Mittelwert gebildet. Senkrecht zur Kante ergibt sich daraus ein Intensitätsprofil der Kantenabbildung über einer Pixelzeile oder Pixelspalte. Die Lage der Kante wird durch den 50 % -Wert dieses Intensitätsprofils definiert.

Die zu vermessenden Strukturelemente haben unterschiedliche Breiten und Längen. Um die Position eines Strukturelementes auf der Maske anzugeben, werden häufig die zueinander parallelen Kantenlagen vermessen und als Position die Mittellinie zu den beiden Kanten angegeben. Bei einem nach Breite und Länge innerhalb des vom Detektorarray gebildeten Meßfeldes meßbaren Strukturelementes oder bei zwei sich kreuzenden Strukturelementen wird die Position durch die Koordinaten des Schnittpunktes beider Mittellinien angegeben.

In zunehmendem Maße werden bei dem Entwurf von Halbleiterschaltkreisen Strukturelemente verwendet, die nicht mehr parallel oder senkrecht zum Masken-Koordinatensystem verlaufen. Das auf dem Detektorarray entstehende Bild dieser nicht-orthogonalen Strukturelemente liegt damit auch nicht mehr parallel oder senkrecht zu den Pixelzeilen und Pixelspalten.

Durch Drehung der CCD-Kamera oder des Meßtisches können diese Strukturelemente wieder orthogonal zu den Pixelzeilen und -Spalten ausgerichtet werden. Der Drehwinkel kann gemessen und damit die Lage der Kante oder die Position des Strukturelementes auf das nicht gedrehte Koordinatensystem zurückgerechnet werden, so daß die Meßmaschine für orthogonale und nicht-orthogonale Strukturelemente unmittelbar nach demselben Auswerteverfahren messen und die Meßwerte in vergleichbarer Darstellung ausgeben kann.

Nachteilig ist der hohe mechanische Aufwand, der für eine präzise Lagerung bei der Drehung der CCD-Kamera oder des Meßtisches erforderlich ist. Außerdem sind die Drehung selbst und die Ausrichtung auf die Kante mit einem zusätzlichen Zeitaufwand verbunden, der die Durchlaufzeiten für die Messungen verlängert. Mit zunehmender Strukturdichte und Anzahl der durch Messung zu überprüfenden Strukturelemente kommt den Durchlaufzeiten aber eine immer wichtigere Bedeutung zu.

Der Erfindung lag daher die Aufgabe zugrunde, ein auf beliebig ausgerichtete Strukturelemente anwendbares Verfahren anzugeben, das ohne mechanische Veränderungen beim Meßablauf innerhalb eines Meßfeldes auskommt.

Diese Aufgabe wird bei einem Verfahren der eingangs genannten Art erfindungsgemäß dadurch gelöst, daß ein rechteckiges Meßfenster erzeugt und mit einer Begrenzungslinie parallel zur Kantenrichtung ausgerichtet wird, die Richtung der senkrecht zur Kantenrichtung stehenden Begrenzungslinie des Meßfensters im Koordinatensystem des Detektorarrays durch ihren Drehwinkel Θ bestimmt wird, bei nicht orthogonal zu den Zeilen und Spalten des Detektorarrays liegenden Begrenzungslinien des Meßfensters ein synthetisches Array gebildet wird, dessen Felder in Zeilen und Spalten parallel zu den Begrenzungslinien des Meßfensters liegen, den Feldern Intensitätswerte zugeordnet werden, die durch gewichtete Bewertung der Intensitäten der Pixel des Detektorarrays bestimmt werden, die jeweils von einem Feld überdeckt werden, aus den den Feldern zugeordneten Intensitätswerten der Abstand $P_{IPC}$ der Kante durch ihren Abstand zum Bezugspunkt bestimmt wird und der Abstand P der Kante im Koordinatensystem des Substrats in Abhängigkeit vom Drehwinkel $\Theta$, vom Abstand $P_{IPC}$ und von der Lage x,y des Bezugspunktes im Koordinatensystem des Substrats gegeben ist durch P = $P_{IPC}$ + L, mit L = x·cos $\Theta$ + y·sin $\Theta$.

Zur automatischen Ausrichtung der Begrenzungslinie des Meßfensters parallel zur Kantenrichtung können das Meßfenster senkrecht zur Kantenrichtung geteilt, in jedem Meßfenster eine die Kantenlage definierende Meßinformation ermittelt und das Meßfenster solange gedreht werden, bis eine optimale Korrelation der Meßinformationen erreicht ist. Die Größe der synthetischen Felder wird zweckmäßigerweise denen der Pixel angepaßt. Die Anpassung erfolgt vorteilhafterweise in Abhängigkeit vom Drehwinkel $\Theta$.

Das erfindungsgemäße Verfahren geht von denselben Meßinformationen aus, die die bekannte Meßmaschine erzeugt. Das grundlegende Meßprinzip, die Kantenlage innerhalb eines rechteckigen Meßfensters aus den Pixelintensitäten abzuleiten, wird beibehalten. Das Verfahren hat daher den Vorteil, bei bestehenden Maschinen nachgerüstet werden zu können.

Der softwaremäßig erzeugte Drehwinkel des Meßfensters in dem vorgegebenen Koordinatensystem des Meßfeldes kann mit hoher Genauigkeit berechnet werden und wird als zusätzlicher Parameter bei der Meßwertangabe verwendet. Dieser Parameter ist in dem bekannten Verfahren für orthogonale Strukturelemente implizit auch schon enthalten und hat dort mit der x-Koordinate den festen Wert 90° und mit der y-Koordinate den Wert 0°. Das erleichtert die Verbindung des auf nicht-orthogonale Strukturelemente erweiterten Verfahrens mit dem bisher angewendeten Verfahren.

Ein entscheidender Schritt ist es, die Intensitätsmeßwerte der vom ausgewählten Meßfenster überdeckten realen Pixel in ein synthetisches Pixel-Array zu übertragen, das orthogonal zu den Begrenzungen des Meßfensters liegt. Die den synthetischen Pixeln (Feldern) zugeordneten Intensitätswerte entstehen durch gewichtete Bewertung der überdeckten realen Pixel. Innerhalb des Koordinatensystems des Meßfensters kann dadurch die Lage der Kante des Strukturelementes wiederum mit den bekannten bildanalytischen Verfahren bestimmt werden. In mathematischer Interpretation ist die ermittelte Kante eine Gerade in dem gedrehten Koordinatensystem des Meßfensters, so daß über den Drehwinkel des Meßfensters durch Koordinatentransformation der Abstand der Kante zu einem Bezugspunkt im Meßfeld des realen Detektorarrays bestimmt werden kann. Als Bezugspunkt wird die optische Achse des Meßsystems gewählt, die durch das Zentrum des vom Detektorarray gebildeten Meßfeldes geht.

Die Lage im Maskenkoordinatensystem ergibt sich, indem zusätzlich der Abstand des Bezugspunktes zum Ursprung dieses Koordinatensystems ermittelt wird. Dieser Abstand ist ersichtlich von den aktuellen Meßtischkoordinaten und dem Drehwinkel des Meßfensters abhängig. Die Lage der Kante ist damit durch den Abstand einer Geraden zum Ursprung des Maskenkoordinatensystems und den Winkel definiert, unter dem diese Gerade eine Achse des Koordinatensystems schneidet.

Die Position von zwei Strukturelementen, die sich unter einem beliebigen Winkel kreuzen, kann daher wiederum durch den Schnittpunkt der ihnen zugeordneten Geraden definiert und bestimmt werden. Das gleiche gilt auch für die Position eines beliebig ausgerichteten, nach Breite und Länge meßbaren Strukturelementes.

Das erfindungsgemäße Verfahren wird nachfolgend anhand von schematisch dargestellten Ausführungsbeispielen näher beschrieben. Die Zeichnung zeigt in

Fig. 1 ein Beispiel eines orthogonalen und eines nicht-orthogonalen Strukturmusters

Fig. 2 die Definition der Lage eines orthogonalen Strukturelementes,

Fig. 3 die Definition der Position eines Strukturmusters,

Fig. 4 die Kantenmessung an einem nicht-orthogonalen Strukturelement,

Fig. 5 die Definition der Lage eines nicht-orthogonalen Strukturelementes
und

Fig. 6 die Definition der Position eines beliebig ausgerichteten Strukturmusters.

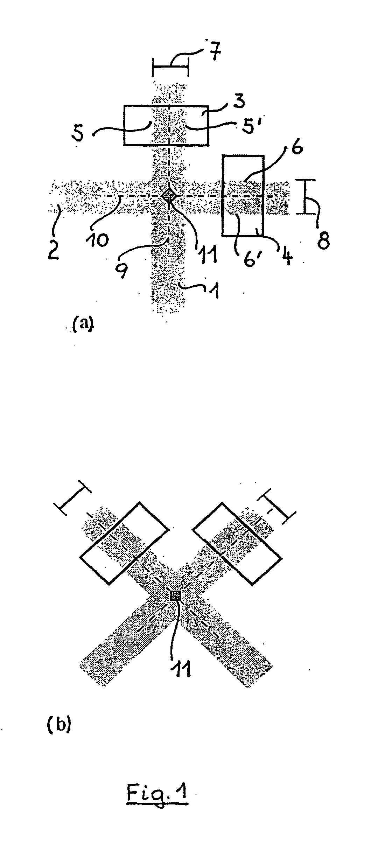

Fig. 1 zeigt ein erstes Strukturmuster (a), das aus zwei senkrecht zueinander stehenden Strukturelementen 1, 2 besteht. Auf jedes der Strukturelemente ist ein Meßfenster 3, 4 gelegt, in dem jeweils die Kanten 5, 5' und 6, 6' der Strukturelemente 1, 2 bestimmt werden. Aus der Differenz der Kanten 5-5' und 6-6' ergibt sich die Breite 7, 8 der Strukturelemente 1, 2. Die Mittellinie 9, 10 der Strukturelemente 1, 2 wird üblicherweise zur Definition ihrer Lage und der Schnittpunkt 11 zur Definition der Position des Strukturmusters (a) verwendet.

Das zweite Strukturmuster (b) ist im Vergleich zum Strukturmuster (a) um den Schnittpunkt 11 gedreht. Werden beide Strukturmuster (a) und (b) in demselben orthogonalen Koordinatensystem dargestellt, dann wird das Strukturmuster (b) als nicht-orthogonal bezeichnet.

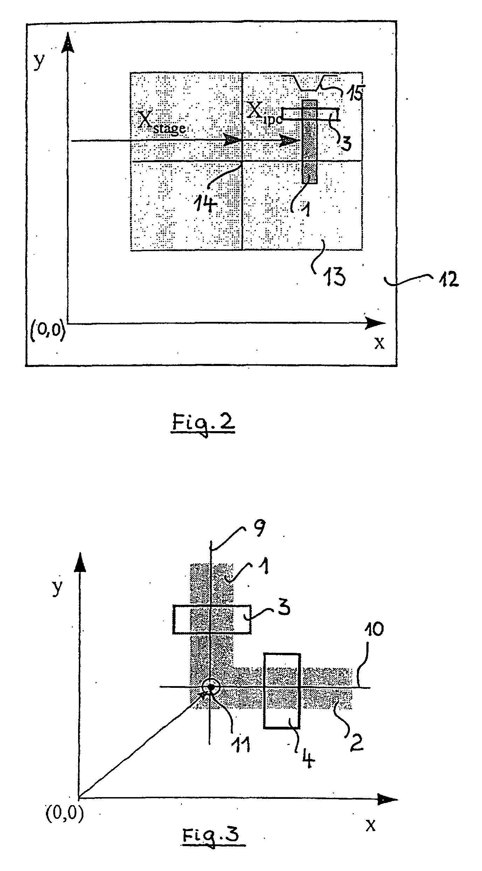

Anhand von Fig. 2 soll das übliche Meßverfahren zur Bestimmung der Lage eines orthogonalen Strukturelementes 1 beschrieben werden, das als opakes Element auf einer Maske 12 aufgebracht ist. Die Maske 12 liegt auf einem nicht dargestellten Meßtisch. Das Masken-Koordinatensystem x, y ist zum Meßtisch-Koordinatensystem ausgerichtet. Das aktuelle Meßfeld wird durch das Detektorarray 13 einer CCD-Kamera dargestellt. Als Bezugspunkt 14 innerhalb des Meßfeldes dient das Zentrum des Detektorarrays 13, das auf der optischen Achse des ebenfalls nicht dargestellten Abbildungssystems liegt. Die hier nicht erkennbaren Pixel des Detektorarrays 13 sind in Zeilen und Spalten parallel zum Masken-Koordinatensystem ausgerichtet.

Das in dem Meßfenster 3 ermittelte Intensitätsprofil 15 zeigt einen schematisch trapezförmig dargestellten Verlauf. Als Kantenlage wird der 50 %- Wert der Flanken des Intensitätsprofils 15 definiert. Die linke Kante hat einen senkrechten Abstand $X_{IPC}$ ($_{IPC}$ = Image Processing Coordinate) vom Bezugspunkt 14. Der senkrechte Abstand des Bezugspunktes 14 zur y-Achse des Masken-Koordinatensystems ist mit $X_{stage}$ ($_{stage}$ = Meßtisch) bezeichnet. In gleicher Weise können die Koordinaten der oberen und unteren Kanten des Strukturelementes 1 ermittelt werden. Die Lage einer Kante ist daher allgemein gegeben durch

$$P_X = X_{IPC} + X_{stage}$$

und

$$P_Y = Y_{IPC} + Y_{stage}.$$

Bei orthogonalen Strukturelementen ist das also ein Vektor, der senkrecht auf der x- oder y-Achse des Masken-Koordinatensystems steht und dessen Länge daher gleich dem senkrechten Abstand der Kante von der zugehörigen Koordinatenachse ist.

Fig. 3 verdeutlicht, wie aus diesen Messungen die Position 11 eines orthogonalen Strukturmusters 1, 2 ermittelt wird. Sie wird durch die Koordinaten des Schnittpunktes 11 der Mittellinien 9, 10 definiert, d.h. durch einen Vektor, der vom Ursprung (0, 0) des Masken-Koordinatensystems zum Schnittpunkt 11 weist. Dieser Vektor setzt sich aus den beiden vorgenannten Vektorkomponenten $P_X$, $P_Y$ zusammen, die senkrecht aufeinander stehen.

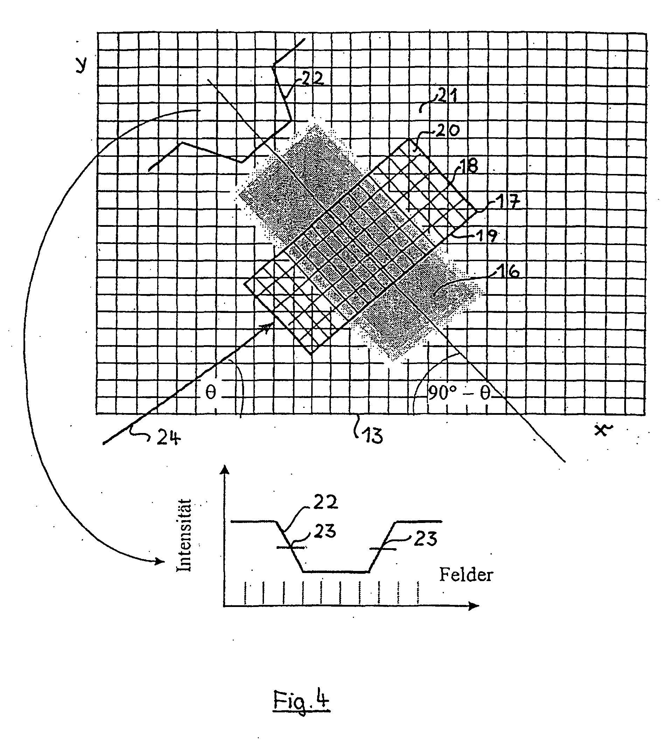

In Fig. 4 ist ein Strukturelement 16 dargestellt, dessen Längsrichtung unter einem Winkel (90 - Θ) zur x-Richtung des ausschnittsweise dargestellten Detektorarrays 13 geneigt ist. Das zur Messung der Lage der langen Kante quer über das Strukturelement 16 gelegte Meßfenster 17 ist mit seiner kurzen Begrenzungslinie 18 parallel zum Kantenverlauf ausgerichtet. Diese Ausrichtung kann individuell vom Bediener der Meßmaschine durchgeführt werden. Sie kann aber auch automatisch durch die Jobdefinition für die Meßmaschine erfolgen. Auf eine automatische Optimierung der Ausrichtung wird weiter unten eingegangen. Die längere Begrenzungslinie 19 bildet in dieser Darstellung mit der x-Richtung des Detektroarrays 13 dann einen Winkel Θ.

Innerhalb des Meßfensters 17 werden Felder 20 gebildet, deren Zeilen und Spalten parallel zu den Begrenzungslinien 18, 19 verlaufen. Die Felder 20 überdecken jeweils anteilig mehrere der Pixel 21 des Detektorarrays 13, wie aus dem Bereich außerhalb des Strukturelementes 16 ersichtlich ist. Aus Gründen einer übersichtlicheren Darstellung sind die vom Strukturelement 16 überdeckten Pixel 21 nicht dargestellt. Die Überdeckungsanteile können bestimmt und die gemessenen Intensitäten der jeweiligen Pixel 21 damit gewichtet werden. Die Summe der gewichteten Intensitätswerte wird dem jeweiligen Feld 20 zugeordnet.

Die Felder 20 haben im allgemeinen nicht dieselbe Größe wie die Pixel 21. Zweckmäßigerweise wird z.B. ihre Breite in Richtung der Begrenzungslinie 19 des Meßfensters, d.h. parallel zu der zu vermessenden Kante, der Größe des Winkels Θ angepaßt. Dadurch kann sich die Anzahl der überdeckten Pixel 21 verringern und die zu berücksichtigenden Intensitätsanteile sind genauer bestimmbar. Aus den Mittelwerten der in einer Spalte parallel zur Kantenrichtung liegenden Felder wird ein Intensitätsprofil 22 gebildet, das über dem Meßfenster 17 dargestellt und noch gesondert herausgezeichnet ist. Der 50 %-Wert 23 gibt die Lage der Kante relativ zur Begrenzungslinie 18 des Meßfensters 17 an.

Zur automatischen Optimierung der Ausrichtung der Begrenzungslinie 18 des Meßfensters 17 parallel zur Kantenrichtung des Strukturelementes 16 kann das Meßfenster senkrecht zur Kantenrichtung zweigeteilt sein. In jedem der Teilfenster wird eine die Kantenlage definierende Meßinformation ermittelt. Das kann der Verlauf des Intensitätsprofils oder z.B. auch die ermittelte Kantenlage sein. Das Meßfenster wird solange gedreht, bis eine optimale Korrelation der Meßinformationen erreicht ist, z.B. bis sich in beiden Teilfenstern gleiche, bzw. jeweils Kantenlagen mit kleinster Differenz ergeben.

Der auf das Meßfenster 17 weisende Vektor 24 steht auf einer parallel zur ermittelten Kantenrichtung verlaufenden Geraden, die durch den nicht dargestellten Bezugspunkt 14 auf dem Detektorarray 13 verläuft. Seine Länge stellt daher den senkrechten Abstand der Begrenzungslinie 18 des Meßfensters 17 zu dieser Geraden dar. Mit der Kenntnis über die Lage der Kante des Strukturelementes 16 innerhalb des Meßfensters 17 läßt sich dann der Abstand der Kante vom Bezugspunkt bestimmen.

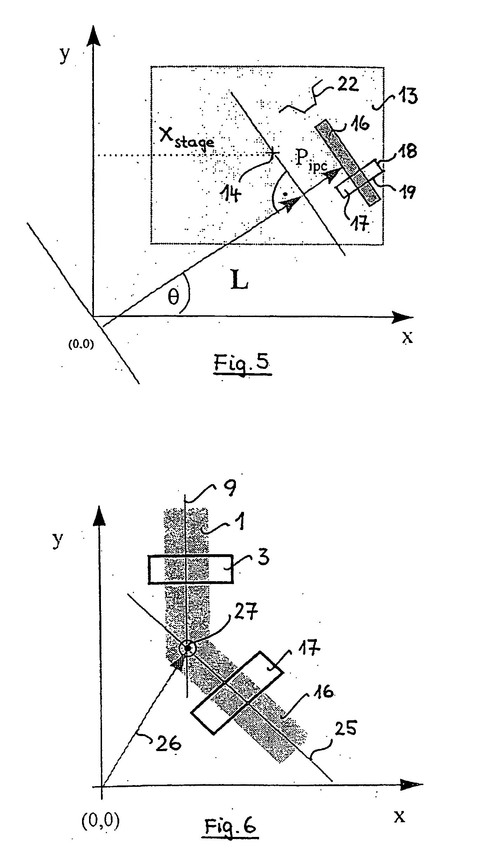

In Fig. 5 sind die für die Lagebestimmung des nicht-orthogonalen Strukturelementes 16 notwendigen Bestimmungsgrößen im Masken-Koordinatensystem x, y dargestellt. Vom Bezugspunkt 14 des Detektorarrays 13 hat die gemessenen Kante des Strukturelementes 16 den senkrechten Abstand $P_{IPC}$. Der den senkrechten Abstand des Bezugspunktes 14 zu einer durch den Ursprung (0, 0) des Masken-Koordinatensystems und parallel zur Kantenrichtung verlaufenden Geraden darstellende Vektor L ist unter dem Winkel Θ zur x-Achse geneigt. Die Lage P der dargestellten Kante des nicht-orthogonalen Strukturelementes 16 ist dann gegeben durch

P = $P_{IPC}$ + L, wobei L = x·cos Θ + y·sin Θ ist.

Mit Θ = 0° führt das zu einem orthogonal zur x-Achse stehenden Strukturelement 1 und mit Θ = 90° ergibt sich die Lage eines parallel zur x-Achse liegenden Strukturelementes 2 gemäß Fig. 3. Die Darstellung ist daher kompatibel zu den für orthogonale Strukturelemente bereits eingeführten Darstellungen für die Lage P einer Kante.

Fig. 6 zeigt die Bestimmungsgrößen für die Angabe der Position eines Strukturmusters, das aus einem orthogonalen Strukturelement 1 und einem nicht-orthogonalen Strukturelement 16 zusammengesetzt ist. Aus den Lagen der beiden Kanten jedes der Strukturelemente 1, 16 kann wiederum die Mittellinie 9, 25 bestimmt werden. Der Vektor 26 vom Koordinatenursprung zum Schnittpunkt 27 der Mittellinien gibt die Position des Strukturmusters im x, y-Masken-Koordinatensystem an.

**Patentansprüche**

1. Verfahren zur Bestimmung des Abstands P einer Kante eines Strukturelements auf einem Substrat zum Ursprung eines der Substratebene fest zugeordneten x/y-Koordinatensystems, bei dem

   - das Strukturelement (1, 2) durch ein mit seiner optischen Achse senkrecht zur Substratebene stehenden Abbildungssystem auf ein Detektorarray (13) abgebildet wird, dessen Pixel in Zeilen und Spalten parallel zu den Achsen des x/y-Koordinatensystems ausgerichtet sind,

   - das Substrat auf einem x/y-verschiebbaren Meßtisch gelagert ist,

   wobei die Verschiebungen relativ zu einem detektorfesten Bezugspunkt im Erfassungsbereich des Detektors interferometrisch gemessen werden, und

   - der Abstand $P_{IPC}$ der Kante zum Bezugspunkt auf dem Detektorarray (13) durch Auswertung eines senkrecht zur Kantenrichtung aus den in einem Meßfenster (17) liegenden Pixeln abgeleiteten Intensitätsprofil des Kantenbildes bestimmt wird,

   **dadurch gekennzeichnet, daß** ein rechteckiges Meßfenster (17) erzeugt und mit einer Begrenzungslinie (18) parallel zur Kantenrichtung ausgerichtet wird, die Richtung der senkrecht zur Kantenrichtung stehenden Begrenzungslinie (19) des Meßfensters (17) im Koordinatensystem des Detektorarrays (13) durch ihren Drehwinkel Θ bestimmt wird, bei nicht-orthogonal zu den Zeilen und Spalten des Detektorarrays (13) liegenden Begrenzungslinien (18, 19) des Meßfensters (17) ein synthetisches Array gebildet wird, dessen Felder (20) in Zeilen und Spalten parallel zu den Begrenzungslinien (18, 19) des Meßfensters (17) liegen, den Feldern (20) Intensitätswerte zugeordnet werden, die durch gewichtete Bewertung der Intensitäten der Pixel (21) des Detektorarrays (13) bestimmt werden, die jeweils von einem Feld (20) überdeckt werden, aus den den Feldern (20) zugeordneten Intensitätswerten der Abstand $P_{IPC}$ der Kante durch ihren Abstand zum Bezugspunkt (14) auf dem Detektorarray (13) bestimmt wird und der Abstand P der Kante im Koordinatensystem des Substrats (12) in Abhängigkeit vom Drehwinkel Θ, vom Abstand $P_{IPC}$ und von der Lage x, y des Bezugspunktes (14) auf dem Detektorarray (13) im Koordinatensystem des Substrats (12) gegeben ist durch P = $P_{IPC}$ + L, mit L = x·cos Θ + y·sin Θ.

2. Verfahren nach Anspruch 1, **dadurch gekennzeichnet, daß** zur automatischen Ausrichtung der Begrenzungslinie (18) des Meßfensters (17) parallel zur Kantenrichtung das Meßfenster (17) senkrecht zur Kantenrichtung geteilt, in jedem Meßfenster eine die Kantenlage definierende Meßinformation ermittelt und das Meßfenster (17) solange gedreht wird, bis eine optimale Korrelation der Meßinformationen erreicht ist.

3. Verfahren nach Anspruch 1, **dadurch gekennzeichnet, daß** die Größe der Felder (20) denen der Pixel (21) angepaßt wird.

4. Verfahren nach Anspruch 3, **dadurch gekennzeichnet, daß** die Anpassung der Größe in Abhängigkeit vom Drehwinkel Θ erfolgt.

**Claims**

1. Method for determining the distance P of an edge of a structural element on a substrate from the origin of an x/y-coordinate system firmly assigned to the substrate plane, in which

   - the structural element (1, 2) is imaged by an imaging system having its optical axis perpendicular to the substrate plane onto a detector array (13) whose pixels are aligned in rows and columns parallel to the axes of the x/y-coordinate system,

- the substrate is supported on an x/y-displaceable measuring table, the displacements being measured interferometrically relative to a reference point in the sensing range of the detector and fixed in relation to the latter, and

- the distance $P_{IPC}$ of the edge from the reference point on the detector array (13) is determined by evaluating an intensity profile of the edge image derived perpendicular to the edge direction from the pixels lying in a measurement window (17),

**characterized in that** a rectangular measuring window (17) is produced and is aligned with a boundary line (18) parallel to the edge direction, the direction of the boundary line (19) of the measuring window (17) perpendicular to the edge direction is determined in the coordinate system of the detector array (13) by means of its rotation angle $\Theta$, a synthetic array is formed in the event of boundary lines (18, 19) of the measuring window (17) not lying orthogonal to the rows and columns of the detector array (13), the fields (20) of the said array lying in rows and columns parallel to the boundary lines (18, 19) of the measuring window (17), the fields (20) are assigned intensity values which are determined by weighted evaluation of the intensities of the pixels (21) of the detector array (13) which are respectively covered by a field (20), the distance $P_{IPC}$ of the edge is determined from the intensity values assigned to the fields (20) by means of the distance of the said edge from the reference point (14) on the detector array (13), and $P = P_{IPC} + L$, where $L = x \cdot \cos \Theta + y \cdot \sin \Theta$ gives the distance P of the edge in the coordinate system of the substrate (12) as a function of the rotation angle $\Theta$, the distance $P_{IPC}$ and the position x, y of the reference point (14) on the detector array (13), using the coordinate system of the substrate (12).

2. Method according to Claim 1, **characterized in that** in order automatically to align the boundary line (18) of the measuring window (17) parallel to the edge direction, the measuring window (17) is divided perpendicular to the edge direction, an item of measurement information defining the edge length is determined in each measuring window, and the measuring window (17) is rotated until an optimum correlation between the items of measuring information is achieved.

3. Method according to Claim 1, **characterized in that** the size of the fields (20) is adapted to those of the pixels (21).

4. Method according to Claim 3, **characterized in that** the size is adapted as a function of the rotation an-gle $\Theta$.

**Revendications**

1. Procédé pour déterminer la distance P d'une arête d'un élément structurel sur un substrat par rapport à l'origine d'un système de coordonnées x/y affecté de manière fixe au plan du substrat, avec lequel

- l'élément structurel (1, 2) est représenté par un système de représentation dont l'axe optique est perpendiculaire au plan du substrat sur un réseau de détecteurs (13) dont les pixels sont alignés en lignes et en colonnes parallèles aux axes du système de coordonnées x/y,
- le substrat est posé sur une table de mesure mobile x/y, les déplacements étant mesurés par interférométrie par rapport à un point de référence fixe du détecteur dans la zone de détection du détecteur, et
- la distance $P_{IPC}$ de l'arête par rapport au point de référence sur le réseau de détecteurs (13) est déterminée en évaluant un profil d'intensité de l'image de l'arête perpendiculaire au sens de l'arête à partir des pixels qui se trouvent dans une fenêtre de mesure (17),

**caractérisé en ce qu'**une fenêtre de mesure rectangulaire (17) est produite et alignée parallèlement au sens de l'arête avec une ligne de délimitation (18), la distance de la ligne de délimitation (19) de la fenêtre de mesure (17) qui est perpendiculaire au sens de l'arête est déterminée dans le système de coordonnées du réseau de détecteurs (13) par son angle de pivotement $\Theta$, un réseau synthétique est formé si les lignes de délimitation (18, 19) de la fenêtre de mesure (17) ne sont pas orthogonales aux lignes et aux colonnes du réseau de détecteurs (13) dont les champs (20) se trouvent dans des lignes et des colonnes parallèles aux lignes de délimitation (18, 19) de la fenêtre de mesure (17), des valeurs d'intensité sont affectées aux champs (20), lesquelles sont déterminées par une évaluation pondérée des intensités des pixels (21) du réseau de détecteurs (13) qui sont à chaque fois recouvert par un champ (20), la distance $P_{IPC}$ de l'arête est déterminée par sa distance par rapport au point de référence (14) sur le réseau de détecteurs (13) à partir des valeurs d'intensité affectées aux champs (20) et la distance P de l'arête dans le système de coordonnées du substrat (12) est donnée en fonction de l'angle de pivotement $\Theta$, de la distance $P_{IPC}$ et de la position x, y du point de référence (14) sur le réseau de détecteurs (13) dans le système de coordonnées du substrat (12) par $P = P_{IPC} + L$, où $L = x.\cos\Theta + y.\sin\Theta$.

**2.** Procédé selon la revendication 1, **caractérisé en ce que** pour l'alignement automatique de la ligne de délimitation (18) de la fenêtre de mesure (17) parallèlement au sens de l'arête, la fenêtre de mesure (17) est divisée perpendiculairement au sens de l'arête, une information de mesure définissant la position de l'arête est déterminée dans chaque fenêtre de mesure et la fenêtre de mesure (17) est pivotée jusqu'à obtenir une corrélation optimale des informations de mesure.

**3.** Procédé selon la revendication 1, **caractérisé en ce que** la taille des champs (20) est adaptée à celle des pixels (21).

**4.** Procédé selon la revendication 3, **caractérisé en ce que** l'adaptation de la taille est effectuée en fonction de l'angle de pivotement Θ.

(a)

(b)

Fig. 1

$X_{stage}$   $X_{ipc}$

15

3

14   1

13   12

(0,0)   x

Fig.2

9

1

y   3

10

11   2

4

(0,0)   x

Fig.3

Fig.4

Fig. 5

Fig. 6